# FASCICULE DE BREVET EUROPEEN

(11) **EP 4 240 990 B1**
(45) Date de publication et mention de la délivrance du brevet: **12.02.2025**
(21) Numéro de dépôt: 21802731.6
(22) Date de dépôt: 04.11.2021
(51) Int. Cl.: F16H 63/36

(54) **ENSEMBLE D'ACTIONNEMENT ET SYSTÈME D'INTERVERROUILLAGE DE DEUX ARBRES DE FOURCHETTES DE BOÎTE DE VITESSES**
BETÄTIGUNGSANORDNUNG UND SYSTEM ZUR VERRIEGELUNG ZWEIER GETRIEBEGABELWELLEN
ACTUATING ASSEMBLY AND SYSTEM FOR INTERLOCKING TWO GEARBOX FORK SHAFTS

(30) Priorité: 04.11.2020 FR 2011323
(43) Date de publication de la demande: 13.09.2023
(73) Titulaire: Renault s.a.s, 92100 Boulogne Billancourt (FR); NISSAN MOTOR CO., LTD., Kanagawa 221-0023 (JP)
(72) Inventeur: GAILLIARD, Fabien, 78084 Guyancourt cedex (FR); SAHRAOUI, Salim, 78084 Guyancourt (FR)
(74) Mandataire: Renault Group
(86) Numéro de dépôt international: PCT/EP2021/080617
(87) Numéro de publication internationale: WO 2022/096562

(56) Documents cités:
- DE-A1- 102012 112 509
- JP-Y1- S4 512 085
- US-A- 2 317 761
- US-A- 2 611 249

## Description

### Domaine technique de l'invention

La présente invention concerne un ensemble d'actionnement d'au moins deux fourchettes d'une boîte de vitesses qui comporte un système mécanique d'interverrouillage.

L'invention trouve notamment à s'appliquer à une boîte de vitesses dite robotisée dans laquelle chaque arbre de fourchette est liée à un arbre dont les déplacements sont provoqués par des actionneurs motorisés pilotés par une unité de commande.

### Arrière-plan technique

Pour piloter le passage de vitesses, on connait un ensemble de commande interne composé par exemple d'un actionneur et d'un arbre ou axe de fourchette dédié aux rapports ou vitesses dites électriques en relation au moteur électrique d'un moteur électrique d'une transmission et une motorisation hybride d'un véhicule automobile ; de deux arbres et deux fourchettes dédiés aux rapports dits thermiques en relation avec le moteur thermique de cette motorisation hybride.

Le principe d'une telle boîte de vitesses « hybride » est de pouvoir passer en même temps des rapports thermiques et rapports vitesses électriques. En revanche, deux rapports d'une même catégorie (électrique ou thermique) ne doivent pas pouvoir être passée en même temps.

Il s'agit du principe dit d'interverrouillage des rapports.

Il concerne ainsi les deux arbres et fourchettes permettant le passage des rapports thermiques.

De manière connue, chaque arbre de fourchette est associé à un premier moteur de qui entraine en rotation un doigt excentré qui entraine l'arbre de fourchette indépendamment des autres.

La fonction d'interverrouillage est d'abord assurée par le pilotage de chacun des moteurs ou actionneurs rotatifs.

Pour augmenter la sécurité, l'invention propose une conception d'un système mécanique d'interverrouillage qui peut être intégré à l'ensemble d'actionnement motorisé.

L'homme du métier connait des dispositifs tels qu'exposés dans les documents US 2317 761 et US 2611 249

### Résumé de l'invention

L'invention propose un système d'interverrouillage des déplacements de deux arbres de fourchettes de boîte de vitesses qui comprend :
a) un premier levier qui :
   -- est monté pivotant, autour d'un premier axe, dans deux sens opposés pour occuper au moins une position angulaire active par rapport à une position angulaire intermédiaire de point mort ;
   -- porte un premier doigt axial excentré relié à un premier arbre d'entrainement d'une première fourchette ;
   -- porte une première came excentrée dont le profil de came comporte un premier cran de verrouillage du premier levier dans sa position de point mort ;
b) un deuxième levier qui :
   -- est monté pivotant, autour d'un deuxième axe parallèle au premier axe, dans deux sens opposés pour occuper au moins une position angulaire actives par rapport à une position angulaire intermédiaire de point mort ;
   -- porte un deuxième doigt axial excentré relié à un deuxième arbre d'entrainement d'une deuxième fourchette ;
   -- porte une deuxième came excentrée dont le profil de came comporte un deuxième cran de verrouillage du deuxième levier dans sa position de point mort ;
c) et un basculeur d'interverrouillage qui :
   -- est monté pivotant, autour d'un axe de basculement parallèle au premier axe, dans deux sens opposés pour occuper l'une ou l'autre de deux position angulaires opposées de verrouillage, par rapport à une position angulaire intermédiaire de repos vers laquelle le basculeur d'interverrouillage est rappelé élastiquement ;
   -- porte un pion axial excentré de verrouillage qui, lorsque le basculeur d'interverrouillage est dans sa position angulaire de repos et lorsque chaque levier d'entrainement est dans sa position angulaire de point mort, est positionné simultanément en regard du premier cran de verrouillage et du deuxième cran de verrouillage,
système dans lequel, angulairement de part et d'autre de son cran de verrouillage, chaque profil de came d'un levier comporte un tronçon actif qui est apte à coopérer avec le pion de verrouillage pour provoquer le pivotement du basculeur d'interverrouillage et l'engagement du pion de verrouillage dans le cran de verrouillage de la came de l'autre levier, puis maintenir le pion de verrouillage dans cette position engagée de verrouillage pour verrouiller angulairement ledit autre levier dans sa position de point mort.

Selon d'autres caractéristiques du système d'interverrouillage :
- chaque profil de came comporte au moins un tronçon actif en arc de cercle convexe centré sur l'axe du levier associé qui est adjacent au cran de verrouillage ;
- quelle que soit la position angulaire de chaque levier, le premier axe, le pion de verrouillage, et le deuxième axe sont alignés ;
- lorsque le basculeur d'interverrouillage est dans sa position angulaire de repos et lorsque chaque levier est dans sa position angulaire de point mort, le premier axe, le premier cran de verrouillage, le pion de verrouillage, le deuxième cran de verrouillage et le deuxième axe sont alignés ;
- quelle que soit la position angulaire de chaque levier , le pion de verrouillage est reçu entre le premier profil de came et le deuxième profil de came ;
- chaque levier est un levier d'entrainement d'un arbre associé d'entrainement d'une fourchette ;
- le premier levier est monté pivotant autour du premier axe dans deux sens opposés pour occuper l'une ou l'autre de deux positions angulaires actives opposées par rapport à sa position angulaire intermédiaire de point mort, et le deuxième levier est monté pivotant autour du deuxième axe dans deux sens opposés pour occuper l'une ou l'autre de deux positions angulaires actives opposées par rapport à sa position angulaire intermédiaire de point mort ;
- chaque profil de came comporte deux tronçons actifs en arc de cercle convexe centrés sur l'axe du levier associé entre lesquels est agencé le cran de verrouillage.

L'invention propose aussi un ensemble d'actionnement de deux arbres de fourchettes d'une
boîte de vitesses caractérisé en ce qu'il comporte :
- un premier actionneur rotatif et un deuxième actionneur rotatif commandés dont les arbres de sortie sont parallèles ;
- et un système d'interverrouillage des déplacements des deux arbres de fourchettes selon l'invention,
et dans lequel le premier actionneur rotatif entraîne le premier levier d'entrainement en pivotement, et le deuxième actionneur rotatif entraîne le deuxième levier d'entrainement en pivotement.

Les axes de rotation des arbres de sortie des deux actionneurs rotatifs sont orthogonaux aux axes parallèles de coulissement des deux arbres de fourchettes.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective avant qui représente un exemple de réalisation d'un ensemble d'actionnement de trois arbres parallèles de fourchettes de passage de rapports d'une boîte de vitesses dont deux arbres sont équipés d'un système d'interverrouillage selon l'invention ;
[Fig.2] - la figure 2 est une vue analogue à celle de la figure 1, sans les arbres de fourchettes, ni les fourchettes associées ;
[Fig.3A] - la figure 3A est une vue en perspective avant du système d'interverrouillage de la figure 2 ;
[Fig.3B] - la figure 3B est une vue en perspective arrière du système d'interverrouillage de la figure 2 ;
[Fig.4A] - la figure 4A est une vue de face avant du système d'interverrouillage des figures 3A et 3B sur laquelle les deux leviers de verrouillage sont représentés chacun dans sa position de point mort et le basculeur d'interverrouillage est dans sa position de repos ;
[Fig.4B] - la figure 4B est une vue de face arrière du système d'interverrouillage de la figure 4A ;
[Fig.5A] - la figure 5A est une vue analogue à celle de la figure 4A sur laquelle le premier levier est dans sa position active de passage d'un premier rapport et le deuxième levier est verrouillé dans sa position de point mort par le basculeur d'interverrouillage qui est dans une position de verrouillage ;
[Fig.5B] - la figure 5B est une vue est une vue de face arrière du système d'interverrouillage 5A;
[Fig.6A] - la figure 6A est une vue analogue à celle de la figure 4A sur laquelle le premier levier est dans son autre position active de passage d'un deuxième rapport et le deuxième levier est verrouillé dans sa position de point mort par le basculeur d'interverrouillage qui est dans une position de verrouillage ;
[Fig.6B] - la figure 6B est une vue de face arrière du système d'interverrouillage 6A ;
[Fig.7A] - la figure 7A est une vue analogue à celle de la figure 4A sur laquelle le premier levier est verrouillé dans sa position de point mort par le basculeur d'interverrouillage qui est dans son autre position de verrouillage et le deuxième levier est dans sa position active de passage d'un troisième rapport ;
[Fig.7B] - la figure 7B est une vue de face arrière du système d'interverrouillage 7A ;
[Fig.8A] - la figure 8A est une vue analogue à celle de la figure 4A sur laquelle le premier levier est verrouillé dans sa position de point mort par le basculeur d'interverrouillage qui est dans son autre position de verrouillage et le deuxième levier est dans son autre position active de passage d'un quatrième rapport ;
[Fig.8B] - la figure 8B est une vue de face arrière du système d'interverrouillage 8A.

### Description détaillée de l'invention

Par convention, les axes géométriques indiqués sur les figures sont orientés de l'arrière vers l'avant.

Dans la description qui va suivre, des éléments identiques, similaires ou analogues seront désignés par les mêmes chiffres de référence.

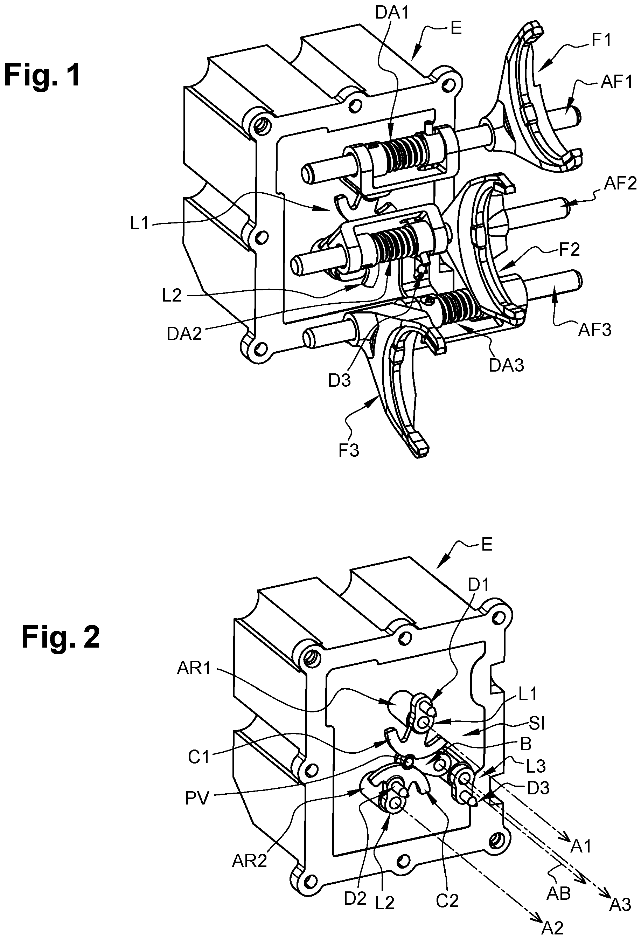

On a représenté à la figure 1 un ensemble E d'actionnement de trois arbres parallèles AF1, AF2 et AF3 de trois fourchettes F1, F2 et F3 appartenant à une boîte de vitesses de véhicule automobile.

De manière connue, chaque arbre de fourchette est solidaire en translation selon son axe de la fourchette associée.

De manière connue et à titre non limitatif, chaque arbre AF1, AF2 et AF3 entraîne en translation axiale la fourchette axiale F1, F2 et F3 qui lui est liée en translation avec un dispositif d'assistance DA1, DA2 et DA3 au passage des rapports de conception générale connue telle que par exemple illustrée dans le document FR-A1-2.988.800.

A titre d'exemple non limitatif, les deux premiers couples AF1-F1 et AF2-F2 sont utilisés pour le passage de rapports de vitesses dits « thermiques » pour la transformation du régime de rotation d'un moteur thermique, tandis que le troisième couple AF3-F3 est utilisé pour le passage de rapports de vitesses dits « électriques » pour la transformation du régime de rotation d'un moteur électrique qui, par exemple, appartient à un groupe motopropulseur dit hybride en association avec le moteur thermique.

Chaque arbre de transmission est ici susceptible d'être entrainé axialement dans les deux sens par rapport à une position axiale intermédiaire dite de point mort dans laquelle aucun rapport n'est engagé.

Le premier couple AF1-F1 est par exemple susceptible de provoquer le passage d'un premier rapport et d'un deuxième rapport, tandis que le deuxième couple AF2-F2 est susceptible de provoquer le passage d'un troisième rapport et d'un quatrième rapport.

Pour l'entrainement du premier arbre AF1 et de sa fourchette associée F1, l'ensemble E d'actionnement comporte un premier actionneur rotatif commandé AR1 qui est apte à entrainer un premier levier L1 en pivotement dans deux sens opposés autour d'un axe géométrique A1 de pivotement. Pour l'entrainement du deuxième arbre AF2 et de sa fourchette associée F2, l'ensemble E d'actionnement comporte un deuxième actionneur rotatif commandé AR2 qui est apte à entrainer un deuxième levier L2 en pivotement dans deux sens opposés autour d'un axe géométrique A2 de pivotement.

Les deux actionneurs rotatifs AR1 et AR2 sont d'axes parallèles et chacun est par exemple l'arbre de sortie d'un moteur électrique non représenté intégré à l'ensemble E d'actionnement.

Conformément aux enseignements de l'invention, les déplacements des deux arbres AF1 et AF2 sont associés à un système d'interverrouillage SI qui est essentiellement constitué :
- d'un premier levier L1 qui est ici le levier d'entrainement dans les deux sens du premier arbre AF1 ;
- d'un deuxième levier L2 qui est ici le levier d'entrainement dans les deux sens du deuxième levier L2 ;
- et d'un basculeur d'interverrouillage B.

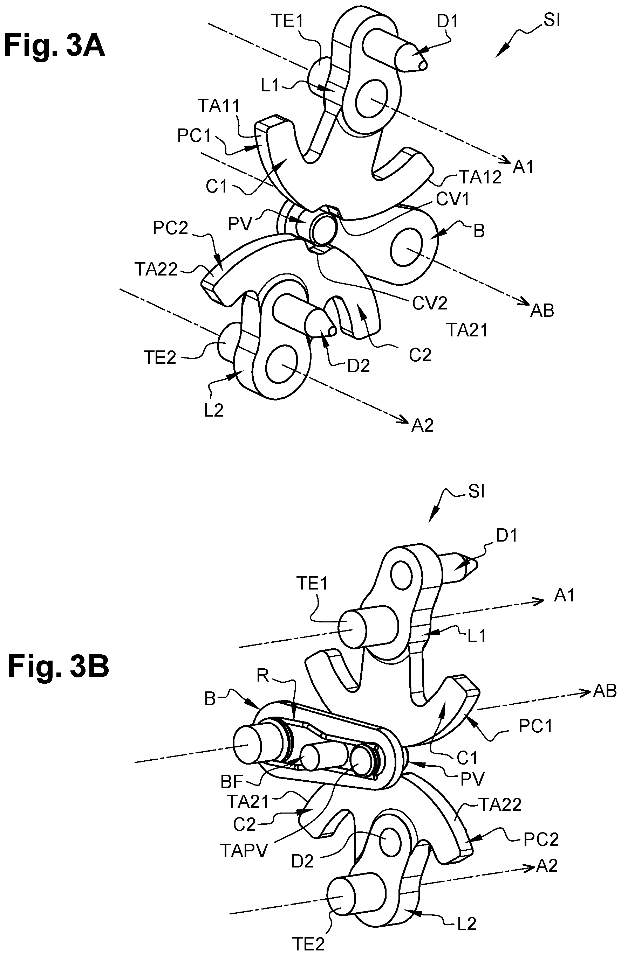

Comme on peut le voir en détail aux figures 3A et 3B, le premier levier L1 porte un premier doigt axial D1 d'entrainement qui est excentré par rapport à l'axe A1, qui s'étend axialement vers l'avant et qui est relié au premier arbre AF1 de la première fourchette F1 par l'intermédiaire du dispositif d'assistance DA1.

Ici diamétralement opposé au premier doigt d'entrainement D1, le premier levier L1 porte une première came C1 excentrée par rapport à l'axe A1.

Le bord cylindrique convexe de la première came C1 est un profil de came PC1 qui comporte successivement un premier tronçon actif TA11 en arc de cylindre, un premier cran CV1 de verrouillage angulaire du premier levier L1, et un deuxième tronçon actif opposé TA12 en arc de cylindre.

Le premier levier L1 comporte aussi une première tige TE1 centrée d'entraînement qui s'étend axialement vers l'arrière et qui est entrainée par le premier actionneur rotatif AR1.

De manière analogue, le deuxième levier L2 porte un deuxième doigt axial D2 d'entrainement qui est excentré par rapport à l'axe A2, qui s'étend axialement vers l'avant et qui est relié au premier arbre AF2 de la première fourchette F2 par l'intermédiaire du dispositif d'assistance DA2.

Ici décalé angulairement par rapport au deuxième doigt d'entrainement D2, le deuxième levier L2 porte une deuxième came C2 excentrée par rapport à l'axe A2.

Le bord cylindrique convexe de la deuxième came C2 est un profil de came PC2 qui comporte successivement un premier tronçon actif TA21 en arc de cylindre, un deuxième cran CV2 de verrouillage angulaire du deuxième levier L2, et un deuxième tronçon actif opposé TA22 en arc de cylindre.

Le deuxième levier L2 comporte aussi une deuxième tige TE2 centrée d'entraînement qui s'étend axialement vers l'arrière et qui est entrainée par le deuxième actionneur rotatif AR2.

Le premier levier L1 est apte à occuper trois positions angulaires fonctionnelles distinctes dont une position de point mort PM1 dans laquelle aucun rapport n'est engagé et deux positions angulaires actives opposées : PA11 dans laquelle un premier rapport est engagé et PA12 dans laquelle un deuxième rapport est engagé par la première fourchette F1.

Le deuxième levier L2 est apte à occuper trois positions angulaires fonctionnelles distinctes dont une position de point mort PM2 dans laquelle aucun rapport n'est engagé et deux positions angulaires actives opposées : PA21 dans laquelle un troisième rapport est engagé et PA22 dans laquelle un quatrième rapport est engagé par la deuxième fourchette F2.

Le positionnement relatif des deux leviers L1 et L2 et leurs dimensions sont telles qu'il existe un entrefer minimal EF constant entre les deux profils de came cylindriques convexes opposés PC1 et PC2.

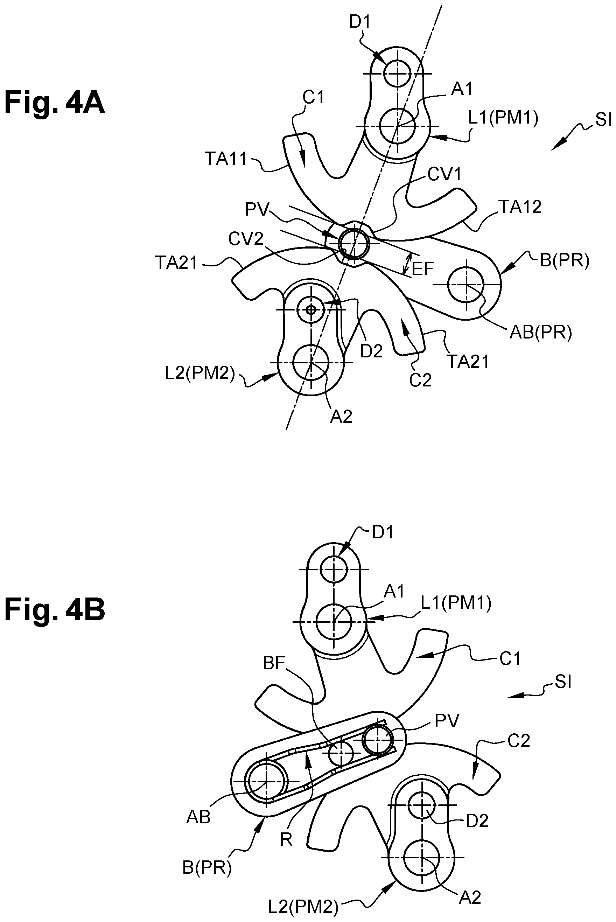

Comme on peut le voir aux figures 3A, 3B et 4A, 4B, lorsque chaque levier L1, L2 est dans sa position angulaire de point mort PM1, PM2, le premier axe A1, le premier cran de verrouillage CV1, le deuxième cran de verrouillage CV2 et le deuxième axe A2 sont alignés.

Au voisinage de son extrémité proximale, le basculeur d'interverrouillage B est monté pivotant par rapport au boîtier de l'ensemble d'entrainement E, autour d'un axe AB de basculement qui est parallèle aux axes A1 et A2 de pivotement des deux leviers L1 et L2.

Le basculeur d'interverrouillage B est ici une plaque qui peut pivoter autour de l'axe de basculement AB dans deux sens opposés pour occuper l'une ou l'autre de deux position angulaires opposées PV1 et PV2 de verrouillage, par rapport à sa position angulaire intermédiaire de repos PR dans laquelle il est représentée aux figures 3A à 4B.

Le basculeur d'interverrouillage B est en permanence rappelé élastiquement vers sa position angulaire de repos PR au moyen du système de rappel agencé sur sa face arrière.

A titre d'exemple non limitatif, le système de rappel comporte ici un ressort de rappel R en forme dite d'épingle à cheveux qui coopère avec une butée fixe BF portée par le boîtier de l'ensemble d'entrainement E.

Au voisinage de son autre extrémité distale, le basculeur d'interverrouillage B porte un pion cylindrique excentré PV de verrouillage qui s'étend axialement vers l'avant et entre les deux profils de came PC1 et PC2 pour coopérer avec ces derniers.

Le diamètre extérieur du pion de verrouillage PV est supérieur à la valeur de l'entrefer EF.

Les positions et dimensions des deux leviers L1 et L2 et du basculeur d'interverrouillage B sont telles que :
- quelle que soit la position angulaire de chaque levier L1, L2 et du basculeur B d'interverrouillage, le pion de verrouillage PV est toujours situé entre les deux profils de came PC1 et PC2 ;
- lorsque le basculeur B d'interverrouillage est dans sa position angulaire de repos PR et lorsque chaque levier d'entrainement L1, L2 est dans sa position angulaire de point mort PM1, PM2, le premier axe A1, le premier cran de verrouillage CV1, le pion de verrouillage PV, le deuxième cran de verrouillage CV2 et le deuxième axe A2 sont alignés et le pion de verrouillage PV est positionné simultanément en regard du premier cran CV1 de verrouillage et du deuxième cran CV2 de verrouillage (Voir figures 3A et 4A).

Pour assurer son rappel élastique vers sa position angulaire de repos, le pion PV de verrouillage s'étend aussi axialement vers l'arrière entre les tronçons d'extrémité libre des deux branches du ressort de rappel R en épingle à cheveux.

La butée fixe BF est agencée entre l'axe de pivotement AB et le tronçon arrière TAPV du pion de verrouillage PV.

Dans la position angulaire de repos PR du basculeur B d'interverrouillage les tronçons d'extrémité libre des deux branches du ressort de rappel R sont en appui élastique contre la paroi cylindrique du tronçon arrière TAPV du pion de verrouillage PV.

### Description du fonctionnement

Ensemble d'entrainement au point mort (Figures 4A et 4B):
- chaque levier L1, L2 est dans sa position angulaire de point mort PM1, PM2 et le basculeur B d'interverrouillage est dans sa position de repos PR,
- le pion de verrouillage PV est agencé entre les deux crans de verrouillage CR1 et CR2,
- chaque levier L1, L2 est libre de pivoter autour de son axe A1, A2 dans l'un ou l'autre sens.

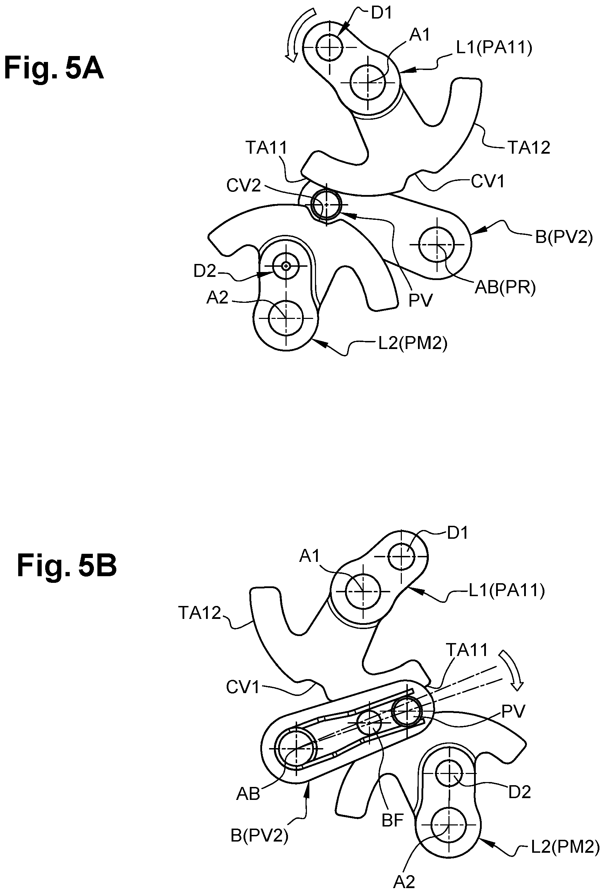

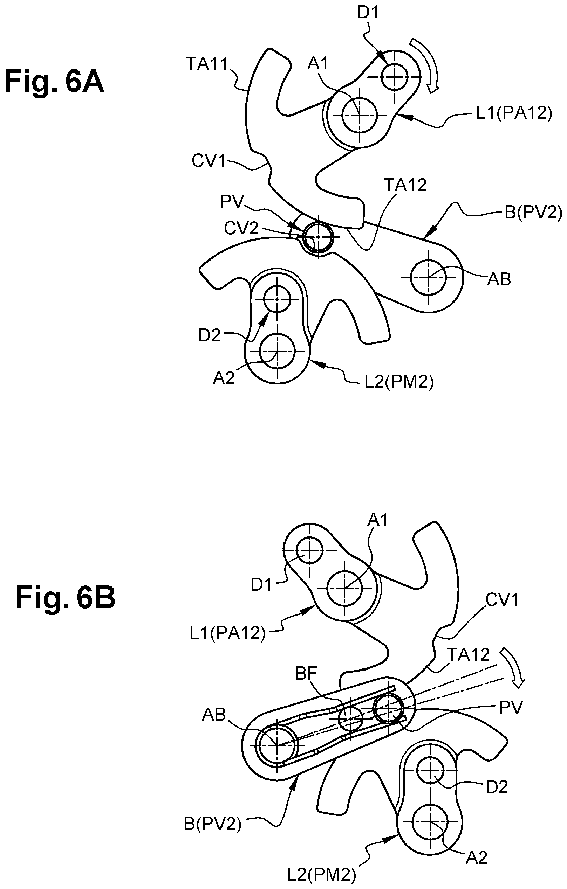

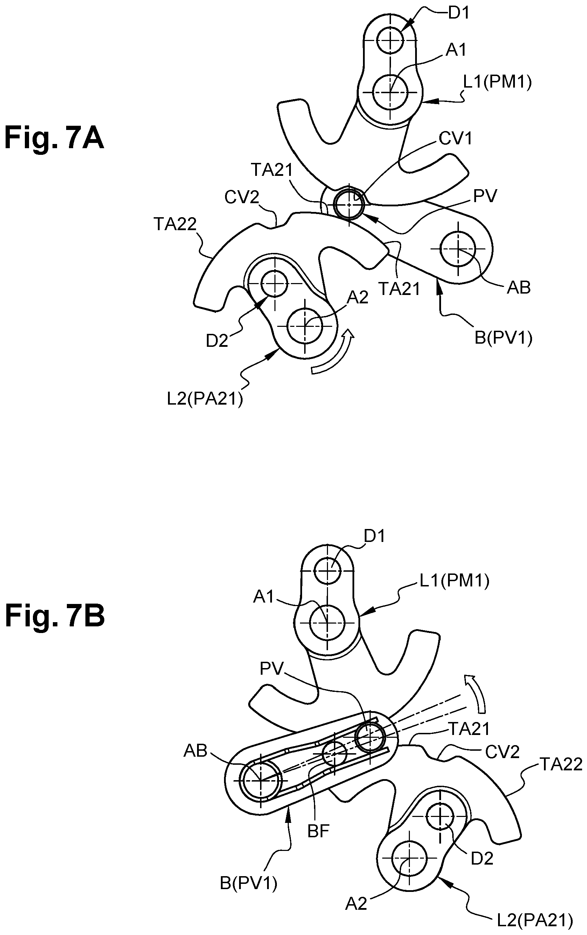

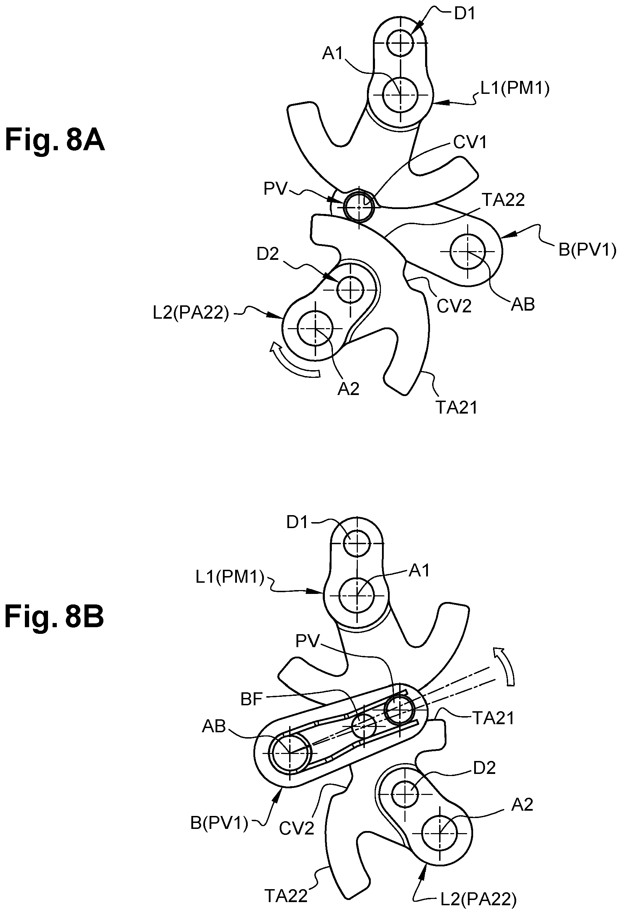

i) Passage du premier rapport (Figures 5A et 5B) :
   - en partant de la position illustrée aux figures 4A et 4B, le premier actionneur rotatif AR1 entraine le premier levier L1 en pivotement dans le sens antihoraire vers sa première position active PA11,
   - lors de ce pivotement, le premier tronçon actif TA11 du premier profil de came PC1 coopère avec le pion de verrouillage PV pour provoquer le basculement du basculeur B d'interverrouillage dans le sens antihoraire et la pénétration du pion de verrouillage PV dans le deuxième cran de verrouillage CV2,
   - le deuxième levier L2 est alors verrouillé angulairement dans sa position de point mort PM2
   - en entrainant à nouveau le premier levier L1 dans le sens horaire, le système d'interverrouillage SI revient dans son état représenté aux figures 4A et 4B, le basculeur B étant rappelé élastiquement par le ressort de rappel R vers sa position de repos PR.
ii) Passage du deuxième rapport (Figures 6A et 6B) :
   - en partant de la position illustrée aux figures 4A et 4B, le premier actionneur rotatif AR1 entraine le premier levier L1 en pivotement dans le sens horaire vers sa deuxième position active PA12,
   - lors de ce pivotement, le deuxième tronçon actif TA12 du premier profil de came PC1 coopère avec le pion de verrouillage PV pour provoquer le basculement du basculeur B d'interverrouillage dans le sens antihoraire et la pénétration du pion de verrouillage PV dans le deuxième cran de verrouillage CV2,
   - le deuxième levier L2 est alors verrouillé angulairement dans sa position de point mort PM2,
   - en entrainant à nouveau le premier levier L1 dans le sens antihoraire, le système d'interverrouillage SI revient dans son état représenté aux figures 4A et 4B, le basculeur B étant rappelé élastiquement par le ressort de rappel R vers sa position de repos PR.
iii) Passage du troisième rapport (Figures 7A et 7B) :
   - en partant de la position illustrée aux figures 4A et 4B, le deuxième actionneur rotatif AR2 entraine le deuxième levier L2 en pivotement dans le sens antihoraire vers sa première position active PA21,
   - lors de ce pivotement, le premier tronçon actif TA21 du deuxième profil de came PC2 coopère avec le pion de verrouillage PV pour provoquer le basculement du basculeur B d'interverrouillage dans le sens horaire et la pénétration du pion de verrouillage PV dans le premier cran de verrouillage CV1,
   - le premier levier L1 est alors verrouillé angulairement dans sa position de point mort PM1,
   - en entrainant à nouveau le deuxième levier L2 dans le sens horaire, le système d'interverrouillage SI revient dans son état représenté aux figures 4A et 4B, le basculeur B étant rappelé élastiquement par le ressort de rappel R vers sa position de repos PR.
iv) Passage du quatrième rapport (Figures 8A et 8B) :
   - en partant de la position illustrée aux figures 4A et 4B, le deuxième actionneur rotatif AR2 entraine le deuxième levier L2 en pivotement dans le sens horaire vers sa deuxième position active PA22,
   - lors de ce pivotement, le premier tronçon actif TA22 du deuxième profil de came PC2 coopère avec le pion de verrouillage PV pour provoquer le basculement du basculeur B d'interverrouillage dans le sens horaire et la pénétration du pion de verrouillage PV dans le premier cran de verrouillage CV1,
   - le premier levier L1 est alors verrouillé angulairement dans sa position de point mort PM1,
   - en entrainant à nouveau le deuxième levier L2 dans le sens antihoraire, le système d'interverrouillage SI revient dans son état représenté aux figures 4A et 4B, le basculeur B étant rappelé élastiquement par le ressort de rappel R vers sa position de repos PR.

La conception du système mécanique d'interverrouillage selon l'invention est particulièrement robuste et permet de compléter la fonction d'interverrouillage liée au système de commande et de pilotage des actionneurs motorisés.

Le système d'interverrouillage selon l'invention est aisément intégré à un ensemble E d'entrainement existant et les modes d'assemblage de cet ensemble avec les autres composants de la boîte de vitesses ne sont pas modifiés.

En variante, dans le cadre de l'invention, le système d'interverrouillage n'est pas limité au cas où chaque arbre de fourchette se déplace dans les deux sens opposés pour le passage de deux rapports distincts.

Chaque arbre ou seulement l'un deux pourrait par exemple se déplacer dans un seul sens.

Le système d'interverrouillage selon l'invention n'est pas non plus limité au cas où les leviers L1 et L2 sont à la fois des leviers d'entrainement des deux arbres de fourchettes et des leviers appartenant au système d'interverrouillage.

Il est par exemple possible de faire appel à des actionneurs linéaires pour chaque arbre de fourchette AF1, AF2 et d'agencer séparément un système d'interverrouillage SI selon l'invention dans lequel chaque doigt D1, D2 est seulement lié en déplacement avec l'arbre associé AF1, AF2.

## Revendications

1. Système (SI) d'interverrouillage des déplacements de deux arbres (AF1, AF2) de fourchettes (F1, F2) de boîte de vitesses qui comprend :
a) un premier levier (L1) qui :
-- est monté pivotant, autour d'un premier axe (A1), dans deux sens opposés pour occuper au moins une position angulaire active (PA11, PA12) par rapport à une position angulaire intermédiaire de point mort (PM1) ;
-- porte un premier doigt axial excentré (D1) relié à un premier arbre (AF1) d'entrainement d'une première fourchette (F1) ;
-- porte une première came excentrée (C1) dont le profil de came (PC1) comporte un premier cran (CV1) de verrouillage du premier levier (L1) dans sa position de point mort (PM1) ;
b) un deuxième levier (L2) qui :
-- est monté pivotant, autour d'un deuxième axe (A2) parallèle au premier axe (A1), dans deux sens opposés pour occuper au moins une position angulaire actives (PA21, PA22) par rapport à une position angulaire intermédiaire de point mort (PM2) ;
-- porte un deuxième doigt axial excentré (D2) relié à un deuxième arbre (AF2) d'entrainement d'une deuxième fourchette (F2) ;
-- porte une deuxième came excentrée (C2) dont le profil de came (PC2) comporte un deuxième cran (CV2) de verrouillage du deuxième levier (L2) dans sa position de point mort (PM2) ;
**Caractérisé en ce que** le système comprend en outre :
c) un basculeur (B) d'interverrouillage qui :
-- est monté pivotant, autour d'un axe de basculement (AB) parallèle au premier axe (A1), dans deux sens opposés pour occuper l'une ou l'autre de deux position angulaires opposées (PV1, PV2) de verrouillage, par rapport à une position angulaire intermédiaire de repos (PR) vers laquelle le basculeur (B) d'interverrouillage est rappelé élastiquement ;
-- porte un pion axial excentré (PV) de verrouillage qui, lorsque le basculeur (B) d'interverrouillage est dans sa position angulaire de repos (PR) et lorsque chaque levier d'entrainement (L1, L2) est dans sa position angulaire de point mort (PM1, PM2), est positionné simultanément en regard du premier cran (CV1) de verrouillage et du deuxième cran (CV2) de verrouillage,
et **en ce que**, angulairement de part et d'autre de son cran (CV1, CV2) de verrouillage, chaque profil de came (PC1, PC2) d'un levier (L1, L2) comporte un tronçon actif (TA11-TA12, TA21TA22) qui est apte à coopérer avec le pion de verrouillage (PV) pour provoquer le pivotement du basculeur (B) d'interverrouillage et l'engagement du pion de verrouillage (PV) dans le cran de verrouillage (CV2, CV1) de la came (C2, C1) de l'autre levier (L2, L1), puis maintenir le pion de verrouillage (PV) dans cette position engagée de verrouillage pour verrouiller angulairement ledit autre levier (L2, L1) dans sa position de point mort (PM2).

2. Système (SI) selon la revendication 1, **caractérisé en ce que** chaque profil de came (PC1, PC2) comporte au moins un tronçon actif (TA11-TA12, TA21 TA22) en arc de cercle convexe centré sur l'axe (A1, A2) du levier associé (L1, L2) qui est adjacent au cran de verrouillage (CV1, CV2).

3. Système (SI) selon l'une quelconque des revendications précédentes, **caractérisé en ce que**, quelle que soit la position angulaire de chaque levier (L1, L2), le premier axe (A1), le pion de verrouillage (PV), et le deuxième axe (A2) sont alignés.

4. Système (SI) selon la revendication précédente, **caractérisé en ce que**, lorsque le basculeur (B) d'interverrouillage est dans sa position angulaire de repos (PR) et lorsque chaque levier (L1, L2) est dans sa position angulaire de point mort (PM1, PM2), le premier axe (A1), le premier cran de verrouillage (CV1), le pion de verrouillage (PV), le deuxième cran de verrouillage (CV2) et le deuxième axe (A2) sont alignés.

5. Système (SI) selon la revendication 2, **caractérisé en ce que**, quelle que soit la position angulaire de chaque levier (L1, L2), le pion de verrouillage (PV) est reçu entre le premier profil de came (PC1) et le deuxième profil de came (PC2).

6. Système (SI) selon l'une quelconque des revendications précédentes, **caractérisé en ce que** chaque levier est un levier (L1, L2) d'entrainement d'un arbre associé (AF1, AF2) d'entrainement d'une fourchette (F1, F2).

7. Système selon l'une quelconque des revendications précédentes, **caractérisé en ce que** le premier levier (L1) est monté pivotant autour du premier axe (A1) dans deux sens opposés pour occuper l'une ou l'autre de deux positions angulaires actives opposées (PA11, PA12) par rapport à sa position angulaire intermédiaire de point mort (PM1), et **en ce que** le deuxième levier (L2) est monté pivotant autour du deuxième axe (A2) dans deux sens opposés pour occuper l'une ou l'autre de deux positions angulaires actives opposées (PA21, PA22) par rapport à sa position angulaire intermédiaire de point mort (PM2).

8. Système (SI) selon la revendication 7, **caractérisé en ce que** chaque profil de came (PC1, PC2) comporte deux tronçons actifs (TA11-TA12, TA21 TA22) en arc de cercle convexe centrés sur l'axe (A1, A2) du levier associé (L1, L2) et entre lesquels est agencé le cran de verrouillage (CV1, CV2).

9. Ensemble (E) d'actionnement de deux arbres (AF1, AF2) de fourchettes (F1, F2) d'une boîte de vitesses **caractérisé en ce qu'**il comporte :
- un premier actionneur rotatif (AR1) et un deuxième actionneur rotatif (AR2) commandés dont les arbres de sortie sont parallèles ;
- et un système (SI) d'interverrouillage des déplacements des deux arbres (AF1, AF2) de fourchettes (F1, F2) selon l'une quelconque des revendications précédentes, et **en ce que** le premier actionneur rotatif (AR1) entraîne le premier levier (L1) d'entrainement en pivotement, et le deuxième actionneur rotatif (AR2) entraîne le deuxième levier (L2) d'entrainement en pivotement.

10. Ensemble (E) selon la revendication 9, **caractérisé en ce que** les axes de rotation des arbres de sortie des deux actionneurs rotatifs sont orthogonaux aux axes parallèles de coulissement des deux arbres (AF1, AF2) de fourchettes (F1, F2).

## Patentansprüche

1. System (SI) für eine Ineinanderverriegelung von Bewegungen zweier Wellen (AF1, AF2) von Schaltgabeln (F1, F2), das umfasst:
a) einen ersten Hebel (L1), der:
-- um eine erste Achse (A1) in zwei entgegengesetzte Richtungen zum Einnehmen mindestens einer aktiven Winkelposition (PA11, PA12) relativ zu einer Zwischenleerlaufwinkelposition (PM1) schwenkbar montiert ist;
-- einen ersten außermittigen axialen Finger (D1) trägt, der an einer ersten Antriebswelle (AF1) einer ersten Gabel (F1) befestigt ist;
-- einen ersten außermittigen Nocken (C1) trägt, dessen Nockenprofil (PC1) eine erste Einkerbung (CV1) für die Verriegelung des ersten Hebels (L1) in seiner Leerlaufposition (PM1) vorweist;
b) einen zweiten Hebel (L2), der:
-- um eine zweite Achse (A2) parallel zu der ersten Achse (A1) in zwei entgegengesetzte Richtungen zum Einnehmen mindestens einer aktiven Winkelposition (PA21, PA22) relativ zu einer Zwischenleerlaufwinkelposition (PM2) schwenkbar montiert ist;
-- einen zweiten außermittigen axialen Finger (D2) trägt, der an einerzweiten Antriebswelle (AF2) einer zweiten Gabel (F2) befestigt ist;
-- einen zweiten außermittigen Nocken (C2) trägt, dessen Nockenprofil (PC2) eine zweite Einkerbung (CV2) für die Verriegelung des zweiten Hebels (L2) in seiner Leerlaufposition (PM2) vorweist;
**dadurch gekennzeichnet, dass** das System ferner umfasst:
c) eine Kippvorrichtung (B) für die Ineinanderverriegelung, die:
-- um eine Kippachse (AB) parallel zu der ersten Achse (A1) in zwei entgegengesetzte Richtungen zum Einnehmen der einen oder der anderen von zwei entgegengesetzten Verriegelungswinkelpositionen (PV1, PV2) relativ zu einer Zwischenruhewinkelposition (PR) schwenkbar montiert ist, zu der die Kippvorrichtung (B) für die Ineinanderverriegelung hin elastisch zurückgeholt wird;
-- einen außermittigen axialen Verriegelungsstift (PV), der, wenn die Kippvorrichtung (B) für die Ineinanderverriegelung in ihrer Ruhewinkelposition (PR) ist, und wenn jeder Antriebshebel (L1, L2) in seiner Leerlaufwinkelposition (PM1, PM2) ist, gleichzeitig gegenüber der ersten Einkerbung (CV1) für die Verriegelung und der zweiten Einkerbung (CV2) für die Verriegelung positioniert ist,
und **dadurch, dass,** winkelig auf beiden Seiten von seiner Einkerbung (CV1, CV2) für die Verriegelung, jedes Nockenprofil (PC1, PC2) eines Hebels (L1, L2) einen aktiven Abschnitt (TA11-TA12, TA21TA22), der geeignet ist, um mit dem Verriegelungsstift (PV) zusammenzuwirken, zum Bewirken des Schwenkens der Kippvorrichtung (B) für die Ineinanderverriegelung und des Eingriffs des Verriegelungsstifts (PV) in die Einkerbung (CV2, CV1) für die Verriegelung des Nockens (C2, C1) des anderen Hebels (L2, L1), vorweist, dann Halten des Verriegelungsstifts (PV) in dieser eingegriffenen Verriegelungsposition zum winkeligen Verriegeln des anderen Hebels (L2, L1) in seiner Leerlaufposition (PM2).

2. System (SI) nach Anspruch 1, **dadurch gekennzeichnet, dass** jedes Nockenprofil (PC1, PC2) mindestens einen aktiven Abschnitt (TA11-TA12, TA21TA22) in Form eines konvexen Kreisbogens, der auf der Achse (A1, A2) des zugehörigen Hebels (L1, L2) zentriert ist, der angrenzend an die Einkerbung (CV1, CV2) für die Verriegelung liegt, vorweist.

3. System (SI) nach einem der vorstehenden Ansprüche,
**dadurch gekennzeichnet, dass** unabhängig von der Winkelposition jedes Hebels (L1, L2) die erste Achse (A1), der Verriegelungsstift (PV) und die zweite Achse (A2) ausgerichtet sind.

4. System (SI) nach dem vorstehenden Anspruch,
**dadurch gekennzeichnet, dass,** wenn die Kippvorrichtung (B) für die Ineinanderverriegelung in ihrer Ruhewinkelposition (PR) ist, und wenn jeder Hebel (L1, L2) in seiner Leerlaufwinkelposition (PM1, PM2) ist, die erste Achse (A1), die erste Einkerbung (CV1) für die Verriegelung, der Verriegelungsstift (PV), die zweite Einkerbung (CV2) für die Verriegelung und die zweite Achse (A2) ausgerichtet sind.

5. System (SI) nach Anspruch 2, **dadurch gekennzeichnet, dass** unabhängig von der Winkelposition jedes Hebels (L1, L2) der Verriegelungsstift (PV) zwischen dem ersten Nockenprofil (PC1) und dem zweiten Nockenprofil (PC2) aufgenommen ist.

6. System (SI) nach einem der vorstehenden Ansprüche,
**dadurch gekennzeichnet, dass** jeder Hebel ein Antriebshebel (L1, L2) einer zugehörigen Antriebswelle (AF1, AF2) einer Gabel (F1, F2) ist.

7. System nach einem der vorstehenden Ansprüche,
**dadurch gekennzeichnet, dass** der erste Hebel (L1) um die erste Achse (A1) in zwei entgegengesetzte Richtungen zum Einnehmen der einen oder der anderen von zwei entgegengesetzten aktiven Winkelpositionen (PA11, PA12) relativ zu seiner Zwischenleerlaufwinkelposition (PM1) schwenkbar montiert ist, und **dadurch, dass** der zweite Hebel (L2) um die zweite Achse (A2) in zwei entgegengesetzte Richtungen zum Einnehmen der einen oder der anderen von zwei entgegengesetzten aktiven Winkelpositionen (PA21, PA22) relativ zu seiner Zwischenleerlaufwinkelposition (PM2) schwenkbar montiert ist.

8. System (SI) nach Anspruch 7, **dadurch gekennzeichnet, dass** jedes Nockenprofil (PC1, PC2) zwei aktive Abschnitte (TA11-TA12, TA21TA22) in Form eines konvexen Kreisbogens, der auf der Achse (A1, A2) des zugehörigen Hebels (L1, L2) zentriert ist, und zwischen denen die Einkerbung (CV1, CV2) für die Verriegelung angeordnet ist, vorweist.

9. Baugruppe (E) für die Betätigung zweier Wellen (AF1, AF2) von Schaltgabeln (F1, F2), **dadurch gekennzeichnet, dass** sie vorweist:
- einen ersten gesteuerten Drehaktuator (AR1) und einen zweiten gesteuerten Drehaktuator (AR2), deren Ausgangswellen parallel zueinander verlaufen;
- und ein System (SI) für die Ineinanderverriegelung der Bewegungen der zwei Wellen (AF1, AF2) von Gabeln (F1, F2) nach einem der vorstehenden Ansprüche, und **dadurch, dass** der erste Drehaktuator (AR1) den ersten Antriebshebel (L1) zum Schwenken antreibt, und der zweite Drehaktuator (AR2) den zweiten Hebel (L2) zum Schwenken antreibt.

10. Baugruppe (E) nach Anspruch 9, **dadurch gekennzeichnet, dass** die Drehachsen der Ausgangswellen der zwei Drehaktuatoren orthogonal zu den parallelen Gleitachsen der zwei Wellen (AF1, AF2) der Gabeln (F1, F2) sind.

## Claims

1. System (SI) for interlocking the movements of two shafts (AF1, AF2) of forks (F1, F2) of a gearbox which comprises:
a) a first lever (L1) which:
-- is mounted so as to pivot about a first axis (A1) in two opposite directions to adopt at least one active angular position (PA11, PA12) relative to a neutral intermediate angular position (PM1);
-- supports a first eccentric axial finger (D1) connected to a first shaft (AF1) for driving a first fork (F1);
-- supports a first eccentric cam (C1), the cam profile (PC1) of which includes a first notch (CV1) for locking the first lever (L1) in its neutral position (PM1);
b) a second lever (L2) which:
-- is mounted so as to pivot about a second axis (A2), parallel to the first axis (A1), in two opposite directions in order to adopt at least one active angular position (PA21, PA22) relative to a neutral intermediate angular position (PM2);
-- supports a second eccentric axial finger (D2) connected to a second shaft (AF2) for driving a second fork (F2);
-- supports a second eccentric cam (C2), the cam profile (PC2) of which includes a second notch (CV2) for locking the second lever (L2) in its neutral position (PM2);
**Characterized in that** the system further comprises:
c) an interlocking rocker (B) which:
-- is mounted so as to pivot about a rocking axis (AB), parallel to the first axis (A1), in two opposite directions in order to adopt one or other of two opposite angular locking positions (PV1, PV2), relative to an intermediate angular rest position (PR) toward which the interlocking rocker (B) is resiliently returned;
-- supports an eccentric axial locking pin (PV) which, when the interlocking rocker (B) is in its angular rest position (PR) and when each drive lever (L1, L2) is in its neutral angular position (PM1, PM2), is positioned simultaneously facing the first locking notch (CV1) and the second locking notch (CV2),
and **in that,** angularly on either side of the locking notch (CV1, CV2) thereof, each cam profile (PC1, PC2) of a lever (L1, L2) includes an active section (TA11-TA12, TA21TA22) which is suitable for engaging with the locking pin (PV) to cause the interlocking rocker (B) to pivot and the locking pin (PV) to engage in the locking notch (CV2, CV1) of the cam (C2, C1) of the other lever (L2, L1), then hold the locking pin (PV) in this engaged locking position to angularly lock said other lever (L2, L1) in its neutral position (PM2).

2. System (SI) according to claim 1, **characterized in that** each cam profile (PC1, PC2) includes at least one active section (TA11-TA12, TA21TA22), in the shape of a convex circular arc, which is centered on the axis (A1, A2) of the associated lever (L1, L2) which is adjacent to the locking notch (CV1, CV2).

3. System (SI) according to any one of the preceding claims, **characterized in that,** irrespective of the angular position of each lever (L1, L2), the first axis (A1), the locking pin (PV) and the second axis (A2) are aligned.

4. System (SI) according to the preceding claim, **characterized in that,** when the interlocking rocker (B) is in its angular rest position (PR) and when each lever (L1, L2) is in its neutral angular position (PM1, PM2), the first axis (A1), the first locking notch (CV1), the locking pin (PV), the second locking notch (CV2) and the second axis (A2) are aligned.

5. System (SI) according to claim 2, **characterized in that,** irrespective of the angular position of each lever (L1, L2), the locking pin (PV) is received between the first cam profile (PC1) and the second cam profile (PC2).

6. System (SI) according to any one of the preceding claims, **characterized in that** each lever is a lever (L1, L2) for driving an associated shaft (AF1, AF2) for driving a fork (F1, F2).

7. System according to any one of the preceding claims, **characterized in that** the first lever (L1) is mounted so as to pivot about the first axis (A1) in two opposite directions in order to adopt one or other of two opposite active angular positions (PA11, PA12) relative to the neutral intermediate angular position (PM1) thereof, and **in that** the second lever (L2) is mounted so as to pivot about the second axis (A2) in two opposite directions to adopt one or other of two opposite active angular positions (PA21, PA22) relative to the neutral intermediate angular position (PM2) thereof.

8. System (SI) according to claim 7, **characterized in that** each cam profile (PC1, PC2) includes two active sections (TA11-TA12, TA21TA22), in the shape of a convex circular arc, which are centered on the axis (A1, A2) of the associated lever (L1, L2) and between which the locking notch (CV1, CV2) is arranged.

9. Assembly (E) for actuating two shafts (AF1, AF2) of forks (F1, F2) of a gearbox, **characterized in that** it comprises:
- a first controlled rotary actuator (AR1) and a second controlled rotary actuator (AR2), the output shafts of which are parallel;
- and a system (SI) for interlocking the movements of the two shafts (AF1, AF2) of forks (F1, F2) according to any one of the preceding claims, and **in that** the first rotary actuator (AR1) drives the pivoting of the first drive lever (L1), and the second rotary actuator (AR2) drives the pivoting of the second drive lever (L2).

10. Assembly (E) according to claim 9, **characterized in that** the axes of rotation of the output shafts of the two rotary actuators are orthogonal to the parallel sliding axes of the two shafts (AF1, AF2) of forks (F1, F2).
